# EUROPEAN PATENT APPLICATION

(11) **EP 3 401 802 A1**
(43) Date of publication of application: **14.11.2018**
(21) Application number: 17735865.2
(22) Date of filing: 06.01.2017
(51) Int. Cl.: G06F 17/30

(54) **WEBPAGE TRAINING METHOD AND DEVICE, AND SEARCH INTENTION IDENTIFICATION METHOD AND DEVICE**

(30) Priority: 07.01.2016 CN 201610008131
(71) Applicant: Tencent Technology (Shenzhen) Company Limited, Shenzhen, Guangdong 518057 (CN)
(72) Inventor: WANG, Zhongcun, Shenzhen Guangdong 518057 (CN)
(74) Representative: AWA Sweden AB
(86) International application number: PCT/CN2017/070504
(87) International publication number: WO 2017/118427

(57) **Abstract**

The present disclosure relates to a web page training method and device. The method includes: obtaining a training web page set of a manually annotated class, and generating a web page vector of a web page in the training web page set, specifically including: obtaining an effective history query character string of a first training web page in the training web page set, and performing word segmentation on the effective history query character string; obtaining an effective quantity of times of each segmented word, the effective quantity of times being a total quantity of times the segmented word occurs in the effective history query character string; calculating a segmented word weight of each segmented word according to the effective quantity of times of each segmented word; generating a web page vector of the first training web page according to each segmented word and the corresponding segmented word weight; and generating a web page classification model according to the manually annotated class of the web page in the training web page set and the corresponding web page vector. Training costs are low, efficiency is high, and class annotation may be automatically performed on a web page after the web page classification model is generated, so that an accuracy rate of an identified intention is higher. A search intention identification method and device are further put forward.

## Description

### RELATED APPLICATIONS

This application claims priority to Chinese Patent Application No. 201610008131.3, entitled "WEB PAGE TRAINING METHOD AND DEVICE, AND SEARCH INTENTION IDENTIFICATION METHOD AND DEVICE" filed on January 07, 2016, whose applicant is Tencent Technology (Shenzhen) Co., Ltd. And which is incorporated herein by reference in its entirety.

### FIELD OF THE TECHNOLOGY

The present disclosure relates to the field of Internet technologies, and in particular, to a web page training method and device, and a search intention identifying method and device.

### BACKGROUND OF THE DISCLOSURE

With the development of Internet technologies, people can search what they need using a search engine through networks. For example, when a user enters "Legend of Sword and Fairy" in a search engine, a quite possible intention of the user may be to search for a television drama or search a game. A returned search result can be closer to the content needed by the user if the search engine first determines the search intention of the user. Intention identification is to determine, for any given query character string, a category to which the query character string belongs.

In a conventional search intention identifying method, a manual annotation method is generally used to perform category annotation on a web page. When intention identification is performed, a manually annotated web page category needs to be used to perform identification, and a web page set of each category needs to be manually annotated. As a result, costs are excessively high. Moreover, the number of results of the manual annotation is generally limited, and a web page category of a web page whose click-through rate is small is quite possibly unknown. Consequently, the intention identification accuracy rate is not high.

### SUMMARY

Accordingly, for the foregoing technical problems, a web page training method and device, and a search intention identifying method and device are provided, so as to improve the search intention identification accuracy rate.

A web page training method is provided, including:
obtaining a training web page set of a manually annotated class, and generating a web page vector of a web page in the training web page set, specifically including:
obtaining an effective history query character string of a first training web page in the training web page set, and performing word segmentation on the effective history query character string;
obtaining an effective quantity of times of each segmented word, the effective quantity of times being a total quantity of times the segmented word occurs in the effective history query character string;
calculating a segmented word weight of each segmented word according to the effective quantity of times of each segmented word;
generating a web page vector of the first training web page according to each segmented word and the corresponding segmented word weight; and
generating a web page classification model according to the manually annotated class of the web page in the training web page set and the corresponding web page vector.

A web page training device is provided, including:
a web page vector generation module, configured to obtain a training web page set of a manually annotated class, and generate a web page vector of a web page in the training web page set, the web page vector generation module including:
a word segmentation unit, configured to obtain an effective history query character string of a first training web page in the training web page set, and perform word segmentation on the effective history query character string;
a segmented word weight calculation unit, configured to obtain an effective quantity of times of each segmented word, the effective quantity of times being a total quantity of times the segmented word occurs in the effective history query character string; and calculate a segmented word weight of each segmented word according to the effective quantity of times of each segmented word;
a web page vector generation unit, configured to generate a web page vector of the first training web page according to each segmented word and the corresponding segmented word weight; and
a web page classification model generation module, configured to generate a web page classification model according to the manually annotated class of the web page in the training web page set and the corresponding web page vector.

According to the foregoing web page training method and device, a training web page set of a manually annotated class is obtained, and a web page vector of a web page in the training web page set is generated, specifically including: obtaining an effective history query character string of a first training web page in the training web page set, and performing word segmentation on the effective history query character string; obtaining an effective quantity of times of each segmented word, the effective quantity of times being a total quantity of times the segmented word occurs in the effective history query character string; calculating a segmented word weight of each segmented word according to the effective quantity of times of each segmented word; generating a web page vector of the first training web page according to each segmented word and the corresponding segmented word weight; and generating a web page classification model according to the manually annotated class of the web page in the training web page set and the corresponding web page vector. Training is performed by using the web page vector generated after word segmentation is performed on the effective history query character string, training costs are low, efficiency is high, and class annotation may be automatically performed on a web page after the web page classification model is generated, so that an immediate-tail or long-tail web page can automatically obtain a class. Therefore, a coverage rate of a web page class in intention identification is high, and an accuracy rate of an identified intention is higher.

A search intention identifying method, includes:
obtaining a to-be-identified query character string, and obtaining a history web page set corresponding to the query character string, the history web page set comprising web pages clicked by using the query character string historically;
obtaining a predetermined web page categorization model generated by using the web page training method according to any one of claims 1 to 4, and obtaining a category of each web page in the history web page set according to the web page categorization model;
collecting statistics on the number of web pages in each category in the history web page set, and performing calculation according to the number of the web pages in each category and a total number of web pages in the history web page set to obtain intention distribution of the query character string; and
obtaining an intention identification result of the query character string according to the intention distribution.

A search intention identification device is provided, including:
an obtaining module, configured to obtain a to-be-identified query character string, and obtain a history web page set corresponding to the query character string, the history web page set including each web page clicked by using the query character string historically;
a web page class obtaining module, configured to obtain a web page classification model generated by using the foregoing web page training device, and obtain a class of a web page in the history web page set according to the web page classification model; and
an intention identification module, configured to collect statistics on a quantity of web pages in each class in the history web page set, perform calculation according to the quantity of the web pages in each class and a total quantity of web pages in the history web page set to obtain intention distribution of the query character string, and obtain an intention identification result of the query character string according to the intention distribution.

According to the foregoing search intention identification method and device, a to-be-identified query character string is obtained, and a history web page set corresponding to the query character string is obtained, the history web page set including each web page clicked by using the query character string historically; a web page classification model generated by using the web page training method in the foregoing embodiment is obtained, and a class of a web page in the history web page set is obtained according to the web page classification model; statistics are collected on a quantity of web pages in each class in the history web page set, and calculation is performed according to the quantity of the web pages in each class and a total quantity of web pages in the history web page set to obtain intention distribution of the query character string; and an intention identification result of the query character string is obtained according to the intention distribution. During intention identification, a class of a web page in the history web page set is automatically identified according to the web page classification model, and a coverage rate is larger than that of a web page of a manually annotated class, so that an immediate-tail or long-tail web page can automatically obtain a class, and an accuracy rate of an identified intention is higher.

Other aspects of the present disclosure can be understood by those skilled in the art in light of the description, the claims, and the drawings of the present disclosure.

### BRIEF DESCRIPTION OF THE DRAWINGS

FIG. 1 is a diagram of an application environment of a web page training method and a search intention identifying method according to an embodiment;
FIG. 2 is a diagram of an internal structure of a server in FIG. 1 according to an embodiment;
FIG. 3 is a flowchart of a web page training method according to an embodiment;
FIG. 4 is a flowchart of a search intention identifying method according to an embodiment;
FIG. 5 is a flowchart of generating a character string classification model according to an embodiment;
FIG. 6 is a structural block diagram of a web page training device according to an embodiment;
FIG. 7 is a structural block diagram of a web page training device according to another embodiment;
FIG. 8 is a structural block diagram of a search intention identification device according to an embodiment;
FIG. 9 is a structural block diagram of a search intention identification device according to another embodiment; and
FIG. 10 is a structural block diagram of a search intention identification device according to still another embodiment.

### DESCRIPTION OF EMBODIMENTS

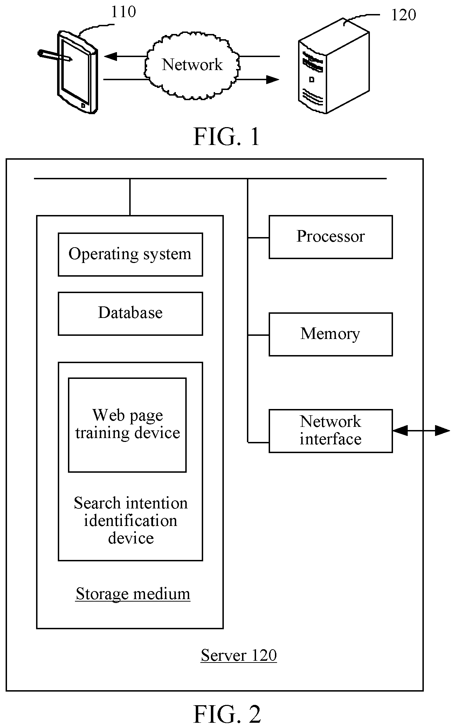

FIG. 1 is a diagram of an application environment of running a web page training method and a search intention identifying method according to an embodiment. As shown in FIG. 1, the application environment includes a terminal 110 and a server 120, where the terminal 110 communicates with the server 120 by using a network.

The terminal 110 may be a smartphone, a tablet computer, a notebook computer, a desktop computer, or the like, but is not limited thereto. The terminal 110 sends a query character string to the server 120 by using the network to perform search, and the server 120 may respond to the query request sent by the terminal 110.

In an embodiment, an internal structure of the server 120 in FIG. 1 is shown in FIG. 2, and the server 120 includes a processor, a storage medium, a memory, and a network interface that are connected by using a system bus. The storage medium of the server 120 stores an operating system, a database, and a search intention identification device, where the search intention identification device includes a web page training device, the database is configured to store data, the search intention identification device is configured to implement a search intention identifying method applicable to the server 120, and the web page training device is configured to implement a web page training method applicable to the server 120. The processor of the server 120 is configured to provide a calculating and control capability, and supports running of the entire server 120. The memory of the server 120 provides an environment for running of the search intention identification device in the storage medium. The network interface of the server 120 is configured to communicate with the external terminal 110 by means of network connection, for example, receive a search request sent by the terminal 110 and return data to the terminal 110.

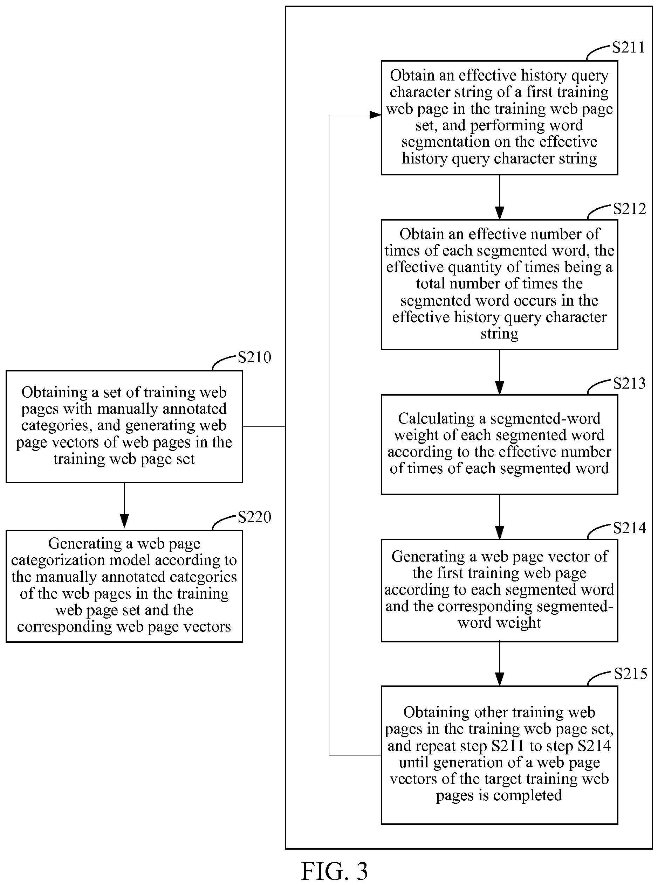

As shown in FIG. 3, in an embodiment, a web page training method is provided. The method may be applied to the server in the foregoing application environment, as an example, and the method includes the followings.

Step S210: Obtaining a set of training web pages with manually annotated categories, and generating web page vectors of web pages in the training web page set.

Specifically, the number of web pages in the training web page set may be self-defined according to actual needs. To make a trained web page categorization model more accurate, the number of the web pages in the training web page set needs to be sufficiently large, the web pages belong to different categories, and the number of the categories also needs to be sufficiently large. Categories of the web pages in the training web page set are all manually annotated.

For example, mp3.baidu.com is manually annotated or tagged as a music category, and youku.com is manually tagged as a video category. When generating web page vectors of the web pages in the training web page set, the web page vectors of all the web pages in the training web page set may be generated, or some web pages may be selected according to a preset condition to generate corresponding web page vectors. For example, different manually annotated categories are selected, and a preset number of web pages are selected from each category to generate corresponding web page vectors.

Specifically, generating web page vectors of the web pages in the training web page set may include the followings.

Step S211: Obtaining an effective history query character string of a first training web page in the training web page set, and performing word segmentation on the effective history query character string.

Specifically, if the first training web page is used as a search result of a first query character string, and is clicked and entered by a user, this first query character string is an effective history query character string of the first training web page; or if the first training web page is used as a search result of a second query character string, but is not clicked or entered by a user, the second query character string is not an effective history query character string of the first training web page. The number of effective history query character strings of the first training web page may be self-defined according to actual needs. However, to enable a training result to be effective, the number of effective history query character strings needs to be sufficiently large. For example, all effective history query character strings of the first training web page in a preset period of time are obtained, and the preset period of time may be a period of time relatively close to a current time. Further, word segmentation is performed on an effective history query character string, and this query character string is denoted by using each segmented word. For example, after word segmentation is performed on "songs from Jay Chou", "Jay Chou" and "songs" are obtained, and an objective of word segmentation is to better denote a web page. If a web page is denoted directly by using a query character string query, data is excessively sparse. For example, query character strings "songs of Jay Chou" and "songs and tunes of Jay Chou" are two different query character strings. However, after word segmentation is performed on the query character strings, "Jay Chou" and "songs" as well as "Jay Chou" and "songs and tunes" are obtained, and both include a segmented word "Jay Chou", and a similarity between the query character strings is increased.

Step S212: Obtaining an effective number of times of each segmented word, the effective number of times being a total number of times the segmented word occurs in the effective history query character string.

Specifically, if there are 30 segmented words "Jay Chou" after the word segmentation is performed on an effective history query character string, an effective number of times of this segmented word "Jay Chou" is 30. A larger effective number of times of a segmented word indicates a larger number of times of entering a current training web page by using a query character string including this segmented word.

Step S213: Calculating a segmented-word weight of each segmented word according to the effective number of times of each segmented word.

Specifically, the value of the segmented-word weight is in a direct proportion to the effective number of times, and a specific method for calculating the segmented-word weight may be self-defined according to actual needs.

In an embodiment, a segmented-word weight *W*(*qᵢ*) of a segmented word *qᵢ* is calculated according to a formula *W*(*qᵢ*) = log(*cᵢ*+1), where i is a sequence number of the segmented word, and *cᵢ* is an effective number of times of the segmented word *qᵢ.*

Specifically, the log function is relatively smooth, and satisfies a direct proportion relationship between the values of the segmented-word weight *W*(*qᵢ*) and the effective number of times *cᵢ,* and the segmented-word weight of each segmented word can be obtained simply and conveniently.

Step S214: Generating a web page vector of the first training web page according to each segmented word and the corresponding segmented-word weight.

Specifically, for the first training web page, if the number of segmented words generated by an effective history query character string of the first training web page is m, each segmented word is denoted by using *qᵢ,* where 1≤*i*≤*m*, and *W*(*qᵢ*) is a segmented-word weight corresponding to the segmented word *qᵢ,* a web page vector of the first training web page may be denoted as {*q*₁:*W*(*q*₁)*, q*₂:*W*(*q*₂),..., *qₘ*:*W*(*qₘ*)}, and the generated web page vector denotes a bag of words (BOW) feature of the first training web page. For example, for a training web page mp3.baidu.com, a web page vector of the training web page is {Jay Chou: 5.4, songs: 3.6, Jolin Tsai: 3.0, tfboys: 10}. A similarity between different web pages may be calculated according to a web page vector. If a similarity between a first web page and a second web page satisfies a preset condition, and a web page category of the first web page is a first category, it may be inferred that a web page category of the second web page is also the first category. If a similarity between a cosine function of the web page vector of mp3.baidu.com and a cosine function of the web page vector of y.qq.com is greater than a preset threshold, it is inferred according to mp3.baidu.com being of a music category that y.qq.com is also of a music category.

Step S215: Obtaining other training web pages in the training web page set, and repeating step S211 to step S214 until generation of web page vectors of the target training web pages is completed.

Specifically, the number of target training web pages may be self-defined according to needs, and the target training web pages may be training web pages in the training web page set that are screened by using a preset rule. Alternatively, all training web pages in the web page set may be directly used as target training web pages.

Step S220: Generating a web page categorization model according to the manually annotated categories of the web pages in the training web page set and the corresponding web page vectors.

Specifically, the manually annotated categories of the web pages in the training web page set and the corresponding web page vectors are substituted into a logistic regression (LR) model to perform training, so as to obtain the web page categorization model. In one embodiment of the present invention, the web page categorization model is trained by using an LR method. On the basis of linear regression, a logic function is used for the LR model, and the accuracy rate of the trained web page categorization model can be relatively high.

Specifically, the web page categorization model is a mathematical model, and is used to categorize web pages, and a categorization model may be trained by using different methods, so as to obtain different web page categorization models. A training method can be selected according to needs.

After offline training is performed by using a supervised learning method to obtain a web page categorization model, category prediction is performed by using the trained web page categorization model when online category prediction is performed on web pages. In one embodiment, a web page categorization model is generated by using web pages of a limited number of manually annotated categories and generated web page vectors, and automatic web page category annotation may be implemented by using the web page categorization model. Further, when a web page vector is used as training data, it is not required that all content on a web page is crawled or bagging of words is performed, data cost of performing training is low, and training efficiency is high.

Accordingly, a training web page set with manually annotated categories is obtained, and web page vectors of web pages in the training web page set are generated, specifically including: obtaining an effective history query character string of a first training web page in the training web page set, and performing word segmentation on the effective history query character string; obtaining an effective number of times of each segmented word, the effective number of times being a total number of times the segmented word occurs in the effective history query character string; calculating a segmented-word weight of each segmented word according to the effective number of times of each segmented word; generating a web page vector of the first training web page according to each segmented word and the corresponding segmented-word weight; and generating a web page categorization model according to the manually annotated categories of the web pages in the training web page set and the corresponding web page vectors. Training is performed by using the web page vector generated after word segmentation is performed on the effective history query character string, training costs are low, efficiency is high, and category annotation may be automatically performed on a web page after the web page categorization model is generated, so that an immediate-tail or long-tail web page can automatically obtain a category. Therefore, a coverage rate of a web page category in intention identification is high, and an accuracy rate of an identified intention is higher.

In an embodiment, before step S220, the method further includes: obtaining a Latent Dirichlet Allocation (LDA) features of the web pages in the training web page set.

Specifically, an LDA (document topic generation model) is used to perform topic clustering on a text, and an LDA feature of a web page may be obtained by inputting an LDA model for a text of a web page.

Step S220 is: generating a web page categorization model according to the LDA features of the web pages, the manually annotated categories, and the corresponding web page vectors.

Specifically, the LDA features of the web pages, the manually annotated categories, and the corresponding web page vectors are substituted into an LR model and training is performed, so as to obtain the web page categorization model. In one embodiment of the present invention, the web page categorization model is trained by using an LR method. On the basis of linear regression, a logic function is used for the LR model, and an accuracy rate of the trained web page categorization model is high.

Specifically, an LDA feature of a web page is added to training data for training a web page categorization model, and the LDA feature reflects a topic of the web page, so that the trained web page categorization model can more accurately perform category annotation on the web page.

Table 1 shows an accuracy rate and a recall rate of categorizing web pages by using a web page categorization model obtained by performing training using different models and methods, and only shows an accuracy rate and a recall rate at the time of performing categorization for a novel category and for other categories, and the value F1 obtained by combining the accuracy rate and the recall rate, where F1 = 2 × accuracy rate/(accuracy rate + recall rate). In the Table 1, LDA denotes a document topic generation model, LR + LDA denotes that an LR model and an LDA feature are both used, LR + BOW + LDA denotes that an LR model, an LDA feature, and a web page vector BOW feature are all used to perform training. Herein, an accuracy rate is how many entries of searched-out entries (such as a document and a web page) are accurate, and a recall rate is how many entries of all accurate entries are searched out. Accuracy rate = number of pieces of extracted correct information/number of pieces of extracted information; recall rate =number of pieces of extracted correct information/number of pieces of information in a sample; F1 is a harmonic average value of the accuracy rate and the recall rate.

**Table 1**

| | **Novel category** | | **Combination of other categories** | | |
|---|---|---|---|---|---|
| | **Accuracy rate** | **Recall rate** | **Accuracy rate** | **Recall rate** | **F1** |
| **LDA** | 0.99 | 0.1 | 0.93 | 0.06 | 0.11 |
| **LR + LDA** | 0.98 | 0 | 0.90 | 0.03 | 0.005 |
| **LR + BOW + LDA** | 0.97 | 0.3 | 0.96 | 0.66 | 0.77 |

It may be learned from the Table 1 that, when web pages are categorized based on web page vectors by using a web page categorization model generated by performing training using an LR method, most accuracy rates and recall rates are increased, F1 obtained for a combination of an accuracy rate and a recall rate is much higher than that in another method, and an effect is desired.

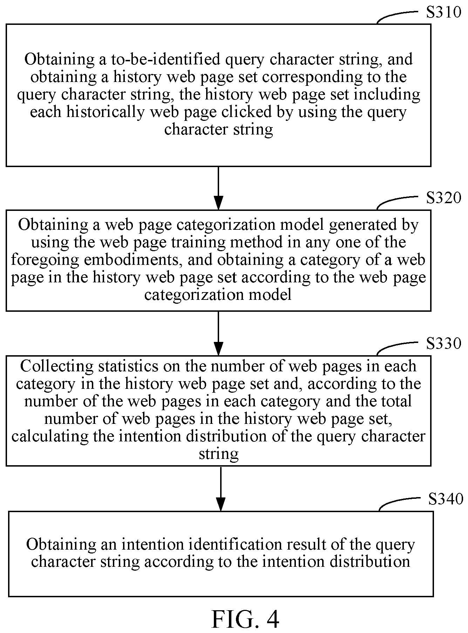

In an embodiment, as shown in FIG. 4, a search intention identifying method is provided, including the followings.

Step S310: Obtaining a to-be-identified query character string, and obtaining a history web page set corresponding to the query character string, the history web page set including each historically web page clicked by using the query character string.

Specifically, the to-be-identified query character string is a query character string entered into a search engine by a terminal, and the history web page set formed by each web page clicked by using this query character string in historical search is obtained.

Step S320: Obtaining a web page categorization model generated by using the web page training method in any one of the foregoing embodiments, and obtaining a category of a web page in the history web page set according to the web page categorization model.

Specifically, the web pages in the history web page set are automatically categorized by using the web page categorization model generated by using the web page training method in the foregoing embodiment. For example, the history web page set is {*url*₁, *url*₂,..., *urlₙ*}*,* where *urlᵢ* (1≤*i*≤*n*) represents each web page, and a category of each web page is obtained: *url*₁∈*d*₁, *url*₂∈*d*₂,..., and *urlₙ*∈*dₛ*, where *d*₁*, d*₂,......,*dₛ* denote categories, s is a total number of the categories, and a category set is {*d*₁, *d*₂,..., *dₛ*}.

Step S330: Collecting statistics on the number of web pages in each category in the history web page set and, according to the number of the web pages in each category and the total number of web pages in the history web page set, calculating the intention distribution of the query character string.

Specifically, statistics are collected on the number of the web pages in each category in the history web page set. If the category *d*₁ includes t web pages, *num*_{*d*₁} = *t*. Statistics are collected on a total number of web pages in the history web page set to obtain the total number of the web pages in the history web page set. For example, for a history web page set {*url*₁*, url*₂*,..., urlₙ*}*,* if the total number of web pages is: *totalᵤᵣₗ* = *n,* a probability that a to-be-identified query character string *p-query* belongs to the category *d*₁ is: *p*(*d*₁/*p*-*query*) = *num*_{*d*₁}/*totalᵤᵣₗ*. Calculation is performed by using the same method to obtain a probability *p*(d*ᵢ*/*p*-*query*) that *p-query* belongs to each category, so as to obtain the intention distribution of the query character string, where 1≤*i*≤*s*, and the magnitude of the probability *p*(*dᵢ*/*p*-*query*) denotes a possibility that the query character string belongs to the category *dᵢ.*

Step S340: Obtaining an intention identification result of the query character string according to the intention distribution.

Specifically, a category with the largest probability in the intention distribution may be used as an intention identification result of the query character string, or a preset number of categories are taken in descending order of probabilities and used as intention identification results of the query character string, or any category whose probability is greater than a preset threshold is used as an intention identification result of the query character string. Further, a service corresponding to a current application sending the query character string may be also obtained, and an intention identification result of the query character string is obtained according to service information of the service and the intention distribution. If the service information of the current application for sending the query character string is a music service, even if a category with the largest probability in the intention distribution is not music, a music category may still be used as an intention identification result.

Accordingly, by obtaining a to-be-identified query character string a history web page set corresponding to the query character string is obtained, the history web page set including each web page clicked by using the query character string historically; a web page categorization model generated by using the disclosed web page training methods is obtained, and a category of a web page in the history web page set is obtained according to the web page categorization model; statistics are collected on the number of web pages in each category in the history web page set, and calculation is performed according to the number of the web pages in each category and the total number of web pages in the history web page set to obtain the intention distribution of the query character string; and an intention identification result of the query character string is obtained according to the intention distribution. During subsequent intention identification, a category of a web page in the history web page set is automatically identified according to the web page categorization model. Thus, the coverage rate is larger than manually annotating category of web pages, and an immediate-tail or long-tail web page can automatically obtain a category, increasing the accuracy rate of the intention identification.

Further, in one embodiment, before step S340, the method further includes: obtaining a character string categorization model, and obtaining a predicted category of the query character string according to the character string categorization model.

Specifically, the character string categorization model is a mathematical model, and is used to categorize query character strings, and a categorization model may be trained by using different methods, so as to obtain different character string categorization models. A training method is selected according to actual needs. After offline training is performed by using a supervised learning method to obtain a character string categorization model, when intention identification is subsequently performed on a query character string, category prediction may be performed on the query character string by using the trained character string categorization model. A predicted category of the query character string may be used to modify an intention identification result of the query character string when intention distribution of the query character string is not obvious. For example, there are many categories in the intention distribution of the query character string, and probabilities of the categories are all close, and are relatively small. In this case, a result might not be accurate if identification is performed only according to the intention distribution of the query character string.

Step S340 may thus include: obtaining the intention identification result of the query character string according to the intention distribution and the predicted category.

Specifically, the intention identification result of the query character string may be determined according to the number of categories in the intention distribution and a probability corresponding to each category. If there are many categories in the intention distribution and a probability corresponding to each category is relatively small, a predicted category may be directly used as the intention identification result of the query character string, or a category with the largest probability in the intention distribution and a predicted category are combined to form the intention identification result of the query character string. A specific algorithm for obtaining an intention identification result may be self-defined according to needs. When the intention distribution is not obtained (for example, if a query character string is a rare character string, the number of web pages in a history web page set corresponding to the query character string is 0 or quite small and, thus, the intention distribution cannot be calculated or the obtained intention distribution has only a probability of one category, and the probability is 100%, which is quite possibly incorrect), a predicted category of the query character string may be directly used as an intention identification result of the query character string.

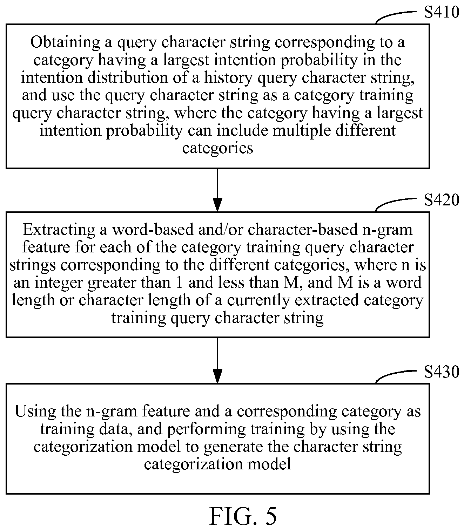

In an embodiment, as shown in FIG. 5, before the step of obtaining a character string categorization model, the method further includes:

Step S410: Obtaining a query character string corresponding to a category having a largest intention probability in the intention distribution of a history query character string, and use the query character string as a category training query character string, where the category having a largest intention probability can include multiple different categories.

Specifically, a large number of history query character strings are calculated to obtain the intention distribution, and categories having the largest intention probability in the intention distribution that correspond to different query character strings may be different. The query character strings corresponding to the categories having the largest intention probability in the intention distribution are used as category training query character strings, and the categories having the largest intention probability include multiple different categories to ensure effectiveness of training data.

Step S420: Extracting a word-based and/or character-based n-gram feature for each of the category training query character strings corresponding to the different categories, where n is an integer greater than 1 and less than M, and M is a word length or character length of a currently extracted category training query character string.

Specifically, if a model is trained by directly using the category training query character strings, for a relatively short query character string such as a query character string whose length is approximately four words, a feature is excessively sparse, and the trained model cannot obtain a quite good training result. In such case, a word-based and/or character-based n-gram feature is extracted, so that a feature length is expanded. For a same query character string, extraction may be performed multiple times, and a character number of each extraction is different. Herein, the character quantity represents the number of words, and results of all extraction form a feature combination. For example, for this category training query character string "song of Jay Chou", word-based 1-gram to 3-gram features are extracted to respectively obtain the following:
1-gram feature: Jay Chou, of, song
2-gram feature: of Jay Chou, song of
3-gram feature: song of Jay Chou

Character-based 1-gram to 3-gram features are extracted to respectively obtain the following:
1-gram feature: Chou, Jie, Lun, of, singing, song
2-gram feature: Jie Chou, Jay, of Lun, singing of, song
3-gram feature: Jay Chou, of Jay, singing of Lun, song of

For a query character string whose length is three words, after character-based 1-gram to 3-gram features are extracted, a feature length of the query character string is expanded to more than 15 dimensions, so as to effectively resolve a feature sparseness problem. Moreover, because the training data set is sufficiently large, desired expansibility is achieved.

Step S430: Using the n-gram feature and a corresponding category as training data, and performing training by using the categorization model to generate the character string categorization model.

Specifically, the n-gram feature and the corresponding category are used as the training data and substituted into the categorization model to perform training, so as to obtain the character string categorization model.

Specifically, the n-gram feature and the corresponding category are used as the training data, the training data is expanded from the category training query character strings, and the categorization accuracy rate and coverage rate of the obtained character string categorization model can be both increased. In an embodiment, a training feature may be mapped to a vector of a fixed number of dimensions (for example, one million dimensions) to improve training efficiency and reduce non-effective training data to improve the accuracy rate of the training, or a category proportion feature or the like of a web page clicked by using a query character string is increased to increase the coverage rate of training data, where the category proportion feature is a ratio between clicked web pages of each category to all web pages, for example, a ratio of clicked video category web pages to all web pages.

Table 2 shows an accuracy rate and a recall rate when categorizing query character strings using a character string categorization model obtained by different models and methods, and F1 is obtained for a combination of the accuracy rate and the recall rate, where F1 = 2 × accuracy rate/(accuracy rate + recall rate). In the table, NB (Naive Bayesian) denotes an NB model, word segmentation denotes extracting a word-based n-gram feature, a character feature denotes extracting a character-based n-gram feature, and SVM (support vector machine) denotes an SVM model.

**Table 2**

| | **Accuracy rate** | **Recall rate** | **F1** |
|---|---|---|---|
| **NB + word segmentation** | 0.50 | 0.1 | 0.16 |
| **NB + character feature** | 0.834 | 0.85 | 0.85 |
| **SVM + word segmentation** | 0.51 | 0.11 | 0.18 |
| **SVM + character feature + word segmentation** | 0.887 | 0.88 | 0.883 |

It can be learned from the table that, the accuracy rate and the recall rate are both high when query character strings are categorized by using a character string categorization model generated by training with extracted character-based n-gram feature, and the accuracy rate and the recall rate are higher when a character-based n-gram feature and a word-based n-gram feature are both extracted. Compared with an entire accuracy rate of the intention identification for which this method is not used, an entire accuracy rate of intention identification for which this method is used may increase from 54.6% to 85%, and increases by 60%.

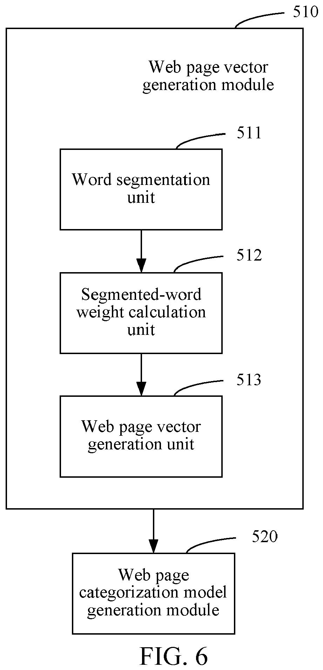

In one embodiment, as shown in FIG. 6, a web page training device is provided. The web page training device includes a web page vector generation module 510 and a web page categorization model generation module 520.

The web page vector generation module 510 may be configured to obtain a training web page set with manually annotated categories, and generate a web page vector of each web page in the training web page set. Further, the web page vector generation module 510 may include a word segmentation unit 511, a segmented-word weight calculation unit 512, and a web page vector generation unit 513.

The word segmentation unit 511 may be configured to obtain an effective history query character string of a first training web page in the training web page set, and perform word segmentation on the effective history query character string.

The segmented-word weight calculation unit 512 may be configured to obtain an effective number of times of each segmented word, the effective number of times being a total number of times the segmented word occurs in the effective history query character string; and calculate a segmented-word weight of each segmented word according to the effective number of times of each segmented word.

The web page vector generation unit 513 may be configured to generate a web page vector of the first training web page according to each segmented word and the corresponding segmented-word weight.

The web page categorization model generation module 520 may be configured to generate a web page categorization model according to the manually annotated categories of the web pages in the training web page set and the corresponding web page vectors.

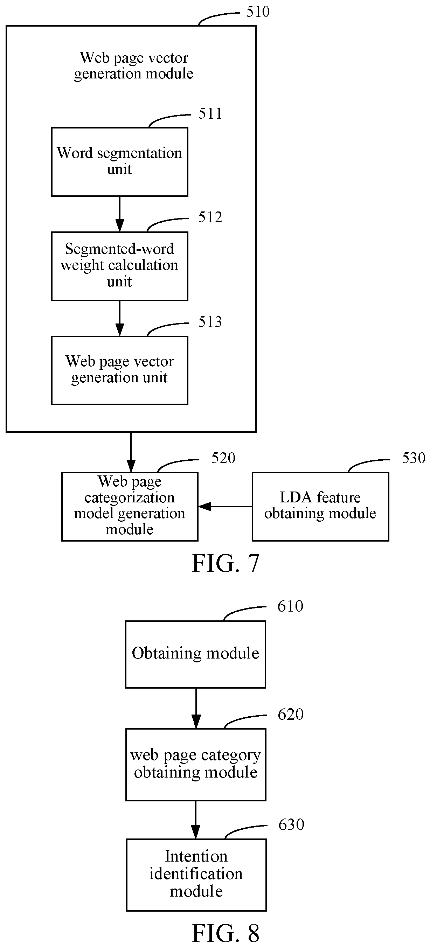

In one embodiment, as shown in FIG. 7, the device further includes an LDA feature obtaining module 530, which may be configured to obtain an LDA feature of the web page in the training web page set. The web page categorization model generation module 520 is further configured to generate a web page categorization model according to the LDA features of the web pages, the manually annotated categories, and the corresponding web page vectors.

In an embodiment, the web page categorization model generation module 520 is further configured to substitute the manually annotated category of the web page in the training web page set and the corresponding web page vector into an LR model and perform training, to obtain the web page categorization model.

In an embodiment, the segmented-word weight calculation unit 511 is further configured to calculate a segmented-word weight *W*(*qᵢ*) of a segmented word *qᵢ* according to a formula *W*(*qᵢ*) = log(*cᵢ*+1), where i is a sequence number of the segmented word, and *cᵢ* is an effective number of times of the segmented word *qᵢ.*

In one embodiment, as shown in FIG. 8, a search-intention identification device is provided. The search-intention identification device may include an obtaining module 610, a web page category obtaining module 620, and an intention identification module 630.

The obtaining module 610 may be configured to obtain a to-be-identified query character string, and obtain a history web page set corresponding to the query character string, the history web page set including each web page clicked by using the query character string historically.

The web page category obtaining module 620 may be configured to obtain a web page categorization model generated by using the web page training device described above, and obtain a category of a web page in the history web page set according to the web page categorization model; and
The intention identification module 630 may be configured to collect statistics on the number of web pages in each category in the history web page set, perform calculation according to the number of the web pages in each category and the total number of web pages in the history web page set to obtain the intention distribution of the query character string, and obtain an intention identification result of the query character string according to the intention distribution.

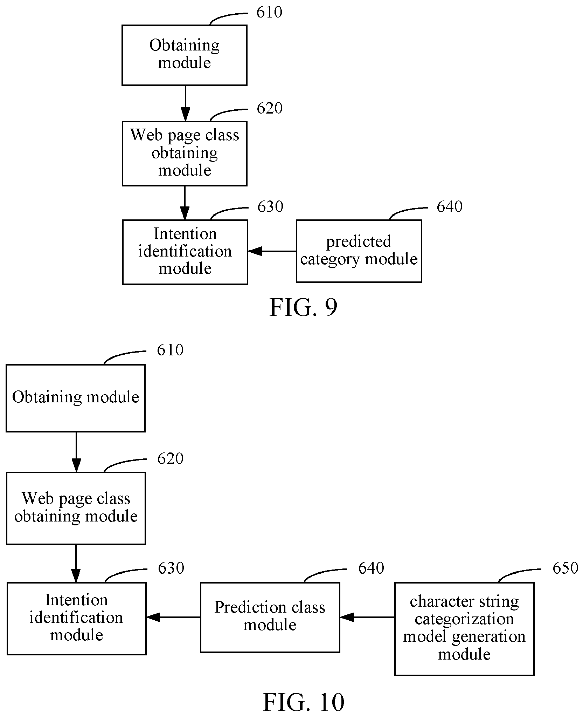

In one embodiment, as shown in FIG. 9, the device further includes a predicted category module 640, which may be configured to obtain a character string categorization model, and obtain a predicted category of the query character string according to the character string categorization model. The intention identification module 630 is further configured to obtain the intention identification result of the query character string according to the intention distribution and the predicted category.

In one embodiment, as shown in FIG. 10, the device further includes a character string categorization model generation module 650, which may be configured to: obtain a query character string corresponding to a category having a largest intention probability in intention distribution corresponding to a history query character string, and use the query character string as a category training query character string, where the category having a largest intention probability includes multiple different categories; extract a word-based and/or character-based n-gram feature for category training query character strings corresponding to the different categories, where n is an integer greater than 1 and less than a word length or character length of a currently extracted query character string; and use the n-gram feature and a corresponding category as training data, and perform training by using a categorization model to generate the character string categorization model.

A person of ordinary skill in the art may understand that all or some of the processes of the methods of the foregoing embodiments may be implemented by a computer program instructing relevant hardware. The program may be stored in a computer readable storage medium. For example, in the embodiments of the present invention, the program may be stored in a storage medium of a computer system, and is executed by at least one processor in the computer system, so as to implement a process including the embodiments of the foregoing methods. The storage medium may be a magnetic disk, an optical disc, read-only memory (ROM), a random access memory (RAM) or the like.

Correspondingly, an embodiment of the present invention further provides a computer storage medium in which a computer program is stored, and the computer program is used to perform the web page training method or the search intention identifying method of the embodiments of the present invention.

Technical features of the foregoing embodiments may be randomly combined. To make description concise, not all possible combinations of the technical features in the foregoing embodiments are described. However, as long as combinations of these technical features do not contradict each other, it should be considered that the combinations all fall within the scope recorded by this specification.

The above embodiments only express several implementation manners of the present disclosure, which are described specifically and in detail, and therefore cannot be construed as a limitation to the patent scope of the present disclosure. It should be noted that, a person of ordinary skill in the art may make several deformations and improvements without departing from the idea of the present disclosure. All such deformations and improvements fall within the protection scope of the present disclosure. Therefore, the patent protection scope of the present disclosure shall be subject to the appended claims.

## Claims

1. A web page training method, comprising:
obtaining a training web page set of a manually annotated class, and generating a web page vector of a web page in the training web page set, specifically comprising:
obtaining an effective history quantity of times of each segmented word, the effective quantity of times being a total quantity of times the segmented word occurs in the effective history query character string;
calculating a segmented word weight of each segmented word according to the effective quantity of times of each segmented word;
generating a web page vector of the first training web page according to each segmented word and the corresponding segmented word weight; and
generating a web page classification model according to the manually annotated class of the web page in the training web page set and the corresponding web page vector.

2. The method according to claim 1, wherein before the step of generating a web page classification model according to the manually annotated class of the web page in the training web page set and the corresponding web page vector, the method further comprises:
obtaining a Latent Dirichlet Allocation (LDA) feature of the web page in the training web page set; and
the step of generating a web page classification model according to the manually annotated class of the web page in the training web page set and the corresponding web page vector is:
generating a web page classification model according to the LDA feature of the web page, the manually annotated class, and the corresponding web page vector.

3. The method according to claim 1, wherein the generating a web page classification model according to the manually annotated class of the web page in the training web page set and the corresponding web page vector comprises:
substituting the manually annotated class of the web page in the training web page set and the corresponding web page vector into a logistic regression (LR) model and performing training, to obtain the web page classification model.

4. The method according to claim 1, wherein the step of calculating a segmented word weight of each segmented word according to the effective quantity of times of each segmented word comprises:
calculating a segmented word weight *W*(*qᵢ*) of a segmented word *qᵢ* according to a formula *W*(*qᵢ*)=log(*cᵢ*+1), wherein i is a sequence number of the segmented word, and *cᵢ* is an effective quantity of times of the segmented word *qᵢ*.

5. A search intention identifying method, comprising:
obtaining a to-be-identified query character string, and obtaining a history web page set corresponding to the query character string, the history web page set comprising web pages clicked by using the query character string historically;
obtaining a predetermined web page categorization model generated by using the web page training method according to any one of claims 1 to 4, and obtaining a category of each web page in the history web page set according to the web page categorization model;
collecting statistics on the number of web pages in each category in the history web page set, and performing calculation according to the number of the web pages in each category and a total number of web pages in the history web page set to obtain intention distribution of the query character string; and
obtaining an intention identification result of the query character string according to the intention distribution.

6. The method according to claim 5, wherein before the step of obtaining an intention identification result of the query character string according to the intention distribution, the method further comprises:
obtaining a character string classification model, and obtaining a prediction class of the query character string according to the character string classification model; and
the step of obtaining an intention identification result of the query character string according to the intention distribution is:
obtaining the intention identification result of the query character string according to the intention distribution and the prediction class.

7. The method according to claim 6, wherein before the step of obtaining a character string categorization model, the method further comprises:
obtaining a query character string corresponding to a category having a largest intention probability in intention distribution corresponding to a history query character string, and using the query character string as a category training query character string, wherein the category having a largest intention probability comprises multiple different categories;
extracting a word-based and/or a character-based n-gram feature for category training query character strings corresponding to the different categories, wherein n is an integer greater than 1 and less than a word length or character length of a currently extracted query character string; and
using the n-gram feature and a corresponding category as training data, and performing training by using a categorization model to generate the character string categorization model.

8. A web page training device, comprising:
a web page vector generation module, configured to obtain a training web page set of a manually annotated category, and generate a web page vector of a web page in the training web page set, the web page vector generation module comprising: a word segmentation unit, configured to obtain an effective history query character string of a first training web page in the training web page set, and perform word segmentation on the effective history query character string;
a segmented word weight calculation unit, configured to obtain an effective number of times of each segmented word, the effective number of times being a total number of times the segmented word occurs in the effective history query character string; and calculate a segmented-word weight of each segmented word according to the effective number of times of each segmented word;
a web page vector generation unit, configured to generate a web page vector of the first training web page according to each segmented word and the corresponding segmented-word weight; and
a web page classification model generation module, configured to generate a web page classification model according to the manually annotated class of the web page in the training web page set and the corresponding web page vector.

9. The device according to claim 8, wherein the device further comprises:
an LDA feature obtaining module, configured to obtain an LDA feature of the web page in the training web page set; and
the web page classification model generation module is further configured to generate a web page categorization model according to the LDA features of the web page, the manually annotated class, and the corresponding web page vector.

10. The device according to claim 8, wherein the web page classification model generation module is further configured to substitute the manually annotated categories of the web page in the training web page set and the corresponding web page vector into a logistic regression (LR) model and perform training, to obtain the web page categorization model.

11. The device according to claim 8, wherein the segmented word weight calculation unit is further configured to calculate a segmented word weight *W*(*qᵢ*) of a segmented word *qᵢ* according to a formula *W*(*qᵢ*)=log(*cᵢ*+1), wherein i is a sequence number of the segmented word, and *cᵢ* is an effective quantity of times of the segmented word *qᵢ*.

12. A search intention identification device, comprising:
an obtaining module, configured to obtain a to-be-identified query character string, and obtain a history web page set corresponding to the query character string, the history web page set comprising web pages clicked by using the query character string historically;
a web page class obtaining module, configured to obtain a web page classification model generated by using the web page training device according to any one of claims 8 to 11, and obtain a class of a web page in the history web page set according to the web page categorization model; and
an intention identification module, configured to collect statistics on the number of web pages in each category in the history web page set, perform calculation according to the number of the web pages in each category and a total number of web pages in the history web page set to obtain intention distribution of the query character string, and obtain an intention identification result of the query character string according to the intention distribution.

13. The device according to claim 12, wherein the device further comprises:
a prediction class module, configured to obtain a character string classification model, and obtain a prediction class of the query character string according to the character string classification model; and
the intention identification module is further configured to obtain the intention identification result of the query character string according to the intention distribution and the predicted category.

14. The device according to claim 13, wherein the device further comprises:
a character string categorization model generation module, configured to obtain a query character string corresponding to a category having a largest intention probability in intention distribution corresponding to a history query character string, and use the query character string as a category training query character string, wherein the category having a largest intention probability comprises multiple different categories;
extracting a word-based and/or a character-based n-gram feature for category training query character strings corresponding to the different categories, wherein n is an integer greater than 1 and less than a word length or character length of a currently extracted query character string; and
using the n-gram feature and a corresponding category as training data, and performing training by using a categorization model to generate the character string categorization model.
